# EUROPEAN PATENT APPLICATION

(11) **EP 1 992 449 A1**
(43) Date of publication of application: **19.11.2008**
(21) Application number: 08008673.9
(22) Date of filing: 08.05.2008
(51) Int. Cl.: B23Q 39/02, B23Q 39/04

(54) **Machining center and machining method**

(30) Priority: 11.05.2007 IT FI20070112
(71) Applicant: Paolino Bacci S.R.L., 56021 Cascina, PI (IT)
(72) Inventor: Ruggieri, Alberto, 56025 Pontedera Pisa (IT)
(74) Representative: Mannucci, Michele

(57) **Abstract**

The machining center comprises: two operating heads (17A, 17B) independent from each other and each movable according to a plurality of numerically controlled axes of translation (X, YA, Z); at least a workpiece table (29) movable according to an axis of translation (Y), to be moved toward and away from the operating heads; a loading and unloading area (40), with a double loader (43A, 43B) to load, in positions approximately side by side along said first numerically controlled axis of translation, a first workpiece and a second workpiece to be machined. The operating heads are controlled to perform an operating cycle comprising the steps of: respectively performing a first series of machining operations and a second series of machining operations on the first workpiece; transferring the operating head, which first completes its series of machining operations, toward the second workpiece on which its starts to perform a respective series of machining operations; and transferring the second operating head toward the second workpiece, on which it performs a respective series of machining operations, after having completed said second series of machining operations of the first workpiece.

## Description

### Technical field

The present invention relates to machining centers or machine tools, for example but not exclusively, for chip-removal machining operations of wooden workpieces, and to the relative machining methods.

### State of the art

In mechanical chip-removal machining operations of workpieces of various materials, and in particular wooden workpieces, there is an increasingly felt need to automate the machining cycles and to reduce the time required to perform these cycles.

Machining centers or machine tools have been produced with one or more operating heads, i.e. heads provided with one or more electrospindles to operate machining tools, with which one or more workpieces are machined simultaneously.

There are known, for example, machining centers provided with two operating heads for machining workpieces that are clamped on two supporting and translating tables. The heads are provided with a plurality of degrees of freedom about numerically controlled axes, typically a first numerically controlled axis of translation and a second numerically controlled axis of translation and one or more numerically controlled axes of rotation. The tables are in turn provided with a translational movement along a third numerically controlled axis of translation to carry the workpieces from a loading and unloading area to a machining area close to the operating heads and vice versa.

These machining centers or machine tools usually perform symmetrical or identical machining operations on two workpieces placed on the same workpiece table using the two operating heads, while the other table is in the loading and unloading position. These machines can be utilized to perform different machining operations on different workpieces disposed on both tables, machining with one operating head the workpieces clamped to one table and with the other operating head the workpieces clamped to the other table. In this case loading and unloading do not take place in masked time.

EP-A-0509972 and EP-A-0462940 describe machines or machining centers with two operating heads designed to simultaneously machine the two ends of a same workpiece loaded time by time in the machine.

EP-A-1250976 describes a machine tool or machining center in which two operating heads simultaneously machine the same workpiece at the ends and also in the intermediate areas. For this purpose, the workpiece is carried on a workpiece table movable along guides distinct and separate with respect to the guides on which the operating heads move. This machine or machining center performs machining operations on one workpiece at a time and does not load in masked time. The operating heads or units remain in stand-by each time that the time required by one of the heads to perform the machining operation is greater than the time required by the other of the two heads to perform the machining operation. Often the total time required to perform all the machining operations on the workpiece cannot be divided by two due to the proximity of the machining operations to be performed, which only allows access of one of the operating heads, so that the other must necessarily remain idle.

### Objects and summary of the invention

According to one aspect, the present invention proposes a machining center or machine tool that allows faster machining cycles to be performed and/or a reduction in the times required to load and unload the workpieces.

According to a further aspect, the invention proposes a machining method that reduces and optimizes the times required to perform the various machining operations on the workpieces.

Substantially, according to a first aspect, the invention provides a machining center comprising:
- at least a first operating head and a second operating head independent from each other and each moving according to a plurality of numerically controlled axes of translation;
- at least a first workpiece table movable according to an approximately horizontal translation axis, to be moved toward and away from the operating heads;
- a loading and unloading area with a double loader to load a first workpiece and a second workpiece to be machined in positions approximately side by side along said first numerically controlled axis of translation.

Characteristically, the first and the second operating head are controlled to perform an operating cycle comprising the steps of:
- respectively performing a first series of machining operations and a second series of machining operations on the first workpiece;
- transferring the operating head, which first completes its series of machining operations, toward the second workpiece on which it starts to perform a respective series of machining operations;
- and transferring the second operating head toward the second workpiece, on which it performs a respective series of machining operations, after having completed said second series of machining operations on the first workpiece.

In one embodiment, the machining center comprises two workpiece tables which can operate in a pendular cycle, i.e. so that one of the tables can transfer a machined workpiece to an unloading area and receive a new workpiece to be machined to transfer it toward the operating heads, while the other table is in the machining area, i.e. in the area in which the operating heads are located, to perform the machining operation on the workpiece carried by said table.

As a rule, operating heads are provided with at last three numerically controlled axes of translation and preferably with one or two numerically controlled axes of rotation or oscillation. The workpiece table or tables can be movable along axes of translation without numerical control, if only two loading/unloading and machining positions are provided, respectively. Preferably, however, the axis along which the table moves or the parallel axes along which the tables move are also numerically controlled.

Unlike in known machining centers, in this case there is a redundant number of axes of translation, i.e. greater than three, with one of the numerically controlled axes of each head parallel to the axis of translation of the tables. This allows all machining operations to be performed by the two heads on one or on the other of the workpieces carried to the machining area, without it being necessary to provide the workpieces with a feed movement using the table or tables. This allows any machining operation to be performed on the same workpiece simultaneously using two heads, or on different workpieces positioned on the same table.

According to a different aspect, the invention relates to a method for machining two workpieces in sequence using a first numerically controlled operating head and a second numerically controlled operating head independent from each other, comprising the steps of:
- taking said first and said second operating head to machine a first workpiece;
- when the first operating head has concluded a first series of machining operations on the first workpiece, transferring said first operating head over a second workpiece and starting to machine the second workpiece with said first head;
- when the second operating head has concluded a second series of machining operations on the first workpiece, transferring said first operating head over the second workpiece and performing a machining operation of the second workpiece with said second head.

Further advantageous features and embodiments of the machining center and of the method according to the invention are indicated in the appended claims and will be described below with reference to some embodiments.

### Brief description of the drawings

The invention will be better understood in the light of non-limiting examples of embodiments of the invention shown in the accompanying drawings and described in detail below. More in particular, in the drawing:
Figs. 1, 2 and 3 respectively show a front view, a plan view according to II-II of Fig. 1 and a side view according to III-III of Fig. 2 of a machining center or machine tool in a first embodiment;
Figs. 4 and 5 show a front view and a plan view according to V-V of Fig. 4 of a different embodiment of the machine or machining center according to the invention;
Figs. 6, 7 and 8 show schematic front view of pairs of workpieces that can be machined on machining centers according to the invention;
Figs. 9A-9F show an operating sequence or cycle in a first embodiment; and
Figs. 10 to 10E schematically show a second operating sequence in a different embodiment.

### Detailed description of embodiments of the invention

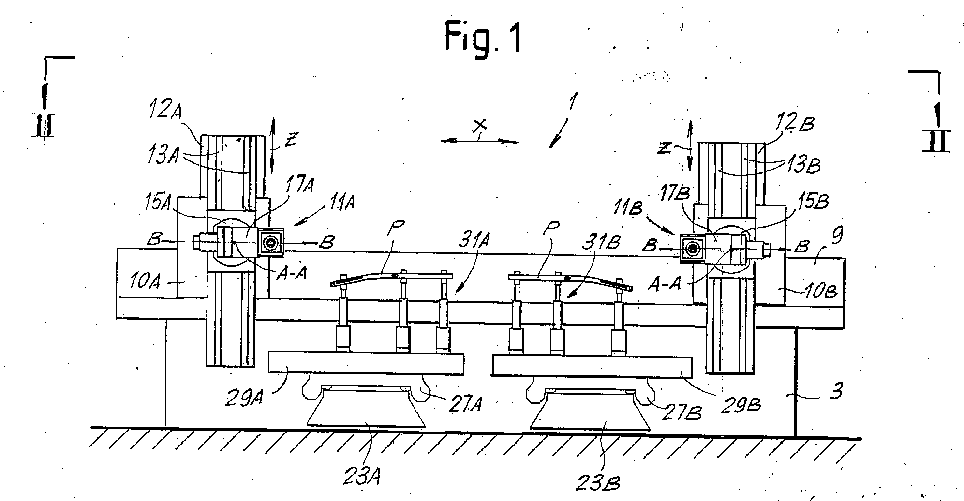

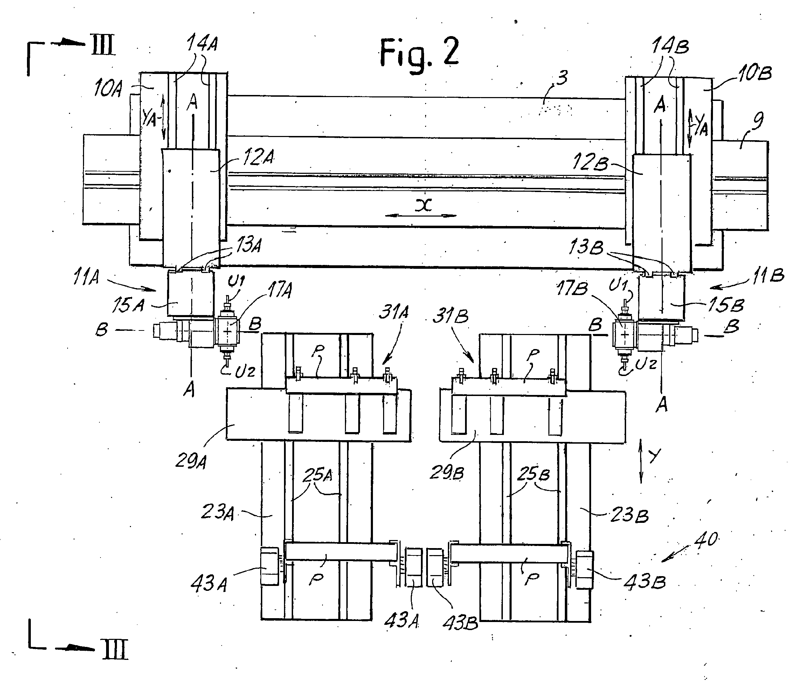

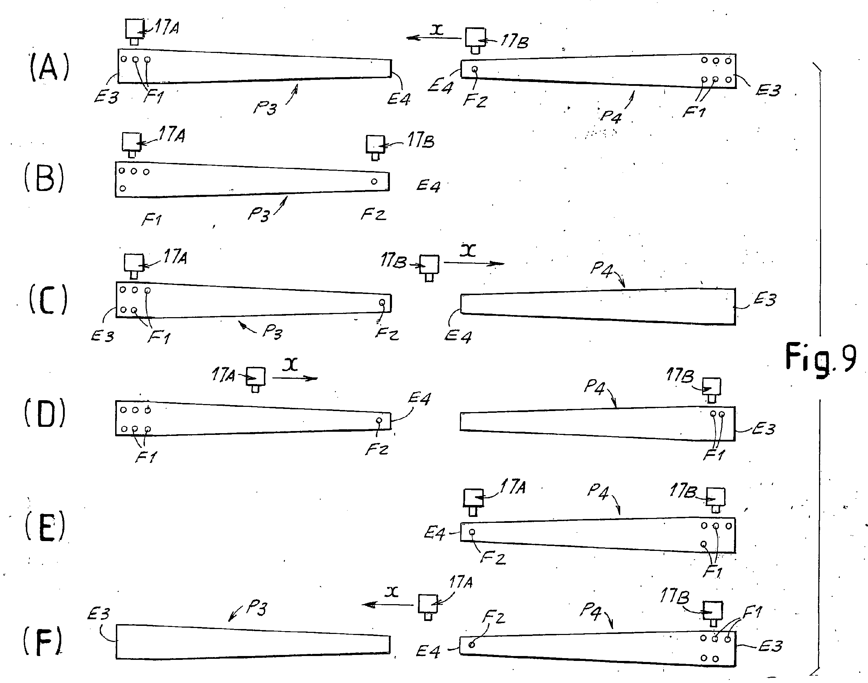

With initial reference to Figs. 1 to 3 there will be described briefly below the mechanical structure or configuration of a first machining center according to the invention that can perform machining cycles that will be described later on by way of example with reference to the sequence of Figs. 9A to 9F.

The machining center, generically indicated with 1, comprises a machine bed 3, on which there is provided a guide 9, sliding along which are two operating units indicated as a whole with 11A, 11B. Each of the two operating units 11A, 11B is provided with an actuator of its own which allows sliding thereof, i.e. translation along a first substantially horizontal numerically controlled axis indicated with X. In practice, each unit 11A, 11 B is provided with a numerically controlled movement along-the axis X and can take, independently from the other, any position with the only limit - in this embodiment - that the two operating units 11A, 11B cannot exchange positions. It would also be possible to provide two mutually superposed guides 9, one for the operating unit 11 A and the other for the operating unit 11B, thereby allowing the two operating units 11A, 11B to exchange reciprocal positions along the numerically controlled axis X.

Each operating unit 11A, 11B comprises a carriage or slide 10A, 10B constrained to the guides 9 and provided with the movement along the axis X. On each slide or carriage 10A, 10B there slides a second slide 12A, 12B on respective guides 14A, 14B, which extend parallel to a second numerically controlled axis of translation, indicated with YA for both operating units 11A, 11B. The axis YA is substantially orthogonal to the axis X and substantially parallel.

On each of the slides 12A, 12B there is arranged a respective vertical guide indicated with 13A and 13B for the two units 11A, 11B respectively. Respective third slides indicated with 15A and 15B can translate along the two vertical guides 13A, 13B. The movement along the vertical guides 13A, 13B is numerically controlled by a numerically controlled axis of translation indicated for both operating units 11 A, 11B with Z.

The slides 15A, 15B carry a respective operating head 17A, 17B. In the example shown the operating heads 17A, 17B are provided with a double electrospindle for tools U1, U2. It must be understood that the operating heads 17A, 17B can also be configured differently, for example with a single electrospindle for a single tool, or with two or more electrospindles to mount a plurality of tools.

With this arrangement, each of the operating heads 17A, 17B is provided with a total translational movement along three numerically controlled axes of translation X, YA and Z. The movements of the two heads 17A, 17B are independent from each other.

In an advantageous embodiment the operating heads 17A, 17B are provided with a further degree of freedom or preferably with two further degrees of freedom, for example represented by a movement of rotation or oscillation about a first numerically controlled axis of rotation A-A and about a second numerically controlled axis of rotation, indicated with B-B. In the example shown both axes of oscillation are horizontal. It would also be possible for the axes of oscillation to have different arrangements, for example one horizontal and one vertical.

In front of the machine bed 3 on which the operating units 11A, 11B translate, machine beds 23A and 23B are positioned, extending approximately orthogonal to the machine bed 3. Substantially horizontal guides 25A, 25B, orthogonal to the guide 9, are provided on the two machine beds 23A, 23B. On the guides 25A, 25B slides 27A, 27B can slide, which carry workpiece tables 29A, 29B. A fourth axis of translation is indicated with Y, preferably also a numerically controlled axis, along which the movement of the slides 27A, 27B, and consequently of the tables 29A, 29B, is controlled. The two slides move along the third numerically controlled axis of translation Y independent to each other.

Members to clamp the workpieces to be machined on the workpiece tables 29A, 29B are provided. In Figs. 1 to 3 these members or devices to clamp the workpieces P to be machined are schematically indicated respectively with 31 A and 31B for the two tables 29A, 29B. They can comprise uprights adjustable along a direction parallel to the axis X and therefore in horizontal direction to modify the reciprocal distance between them. Each upright can present a pair of stops movable with respect to each other to clamp the workpieces to be machined. In one embodiment the height of the members to clamp the workpieces is also adjustable along a direction substantially parallel to the axis Z. This allows the workpiece clamping position of each clamping member 31A, 31B to be adjusted in the most appropriate point as a function of the type of machining operation to be performed and of the shape of the workpiece P to be clamped.

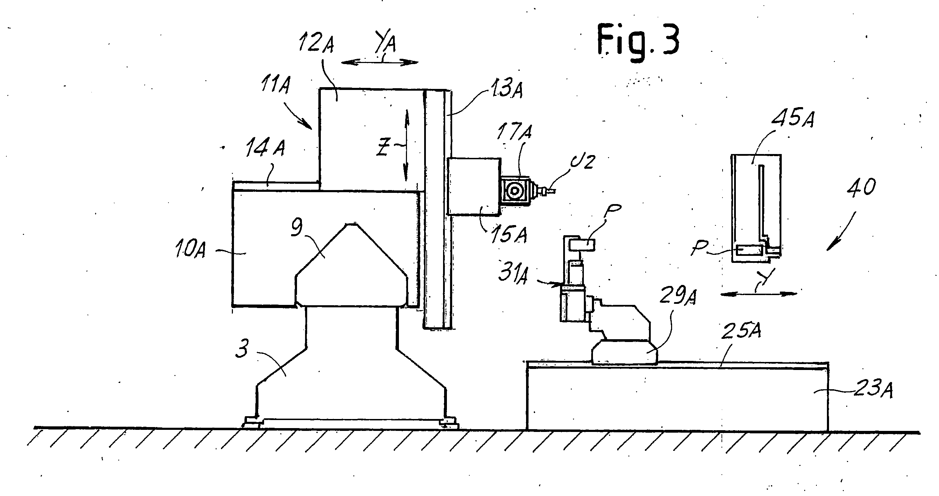

In a loading and unloading area, indicated with 40, in which the workpiece tables 29A, 29B can be carried by translating them according to the axis Y, a double loader 43A, 43B is located. With this double loader it is possible to automatically load single workpieces P to be machined, picking them up from the magazines 45A, 45B above (see Fig. 3 in which the single magazine 45A is shown). These workpieces usually have an elongated extension, i.e. a larger dimension approximately parallel to the axis X and substantially smaller transverse dimensions. The workpieces loadable on the tables 29A, 29B can be identical to each other, symmetrical or even different, as will be explained below.

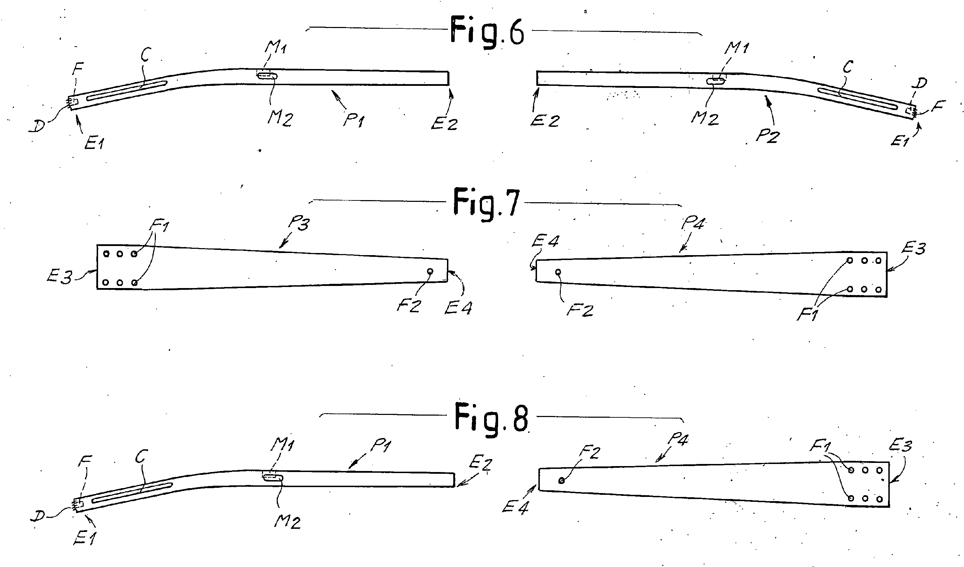

Figs. 6, 7 and 8 schematically show three different pairs of workpieces that can be machined in sequence with the machining center of Figs. 1 to 3 with operating cycles that will be described in greater detail below with reference to Figs. 9A-9F. Fig. 6 indicates -by way of example two symmetrical workpieces P1 and P2, for example representing the right and left rear uprights of a chair. The workpieces P1 and P2 have a longitudinal extension, i.e. are elongated or beam-shaped elements.

In the example shown, each of the workpieces P1, P2 has a first end E1 and a second end E2. Fig. 6 indicates by way of example some machining operations that can be performed on the two workpieces. More in particular, in the intermediate area between the ends E1, E2 there are indicated two mortises or cavities M1, M2 for both the workpieces P1, P2. In the portion of each workpiece P1, P2 closest to the end E1 there are provided an elongated cavity C, a front hole F and a toothed profile D, the hole F and the profile D being arranged at the ends E1 of the two workpieces.

It is pointed out that the machining operations necessary to form the cavities C, the holes F and the teeth D must be performed by a single operating head, due to the proximity of these machining operations, which prevents simultaneous operation of two heads side by side. Vice versa, the mortises M1, M2 can be performed by a second one of the two heads provided on the machining center while the first head performs one or other of the machining operations C, F, D. It is also pointed out that a substantially longer time is required to perform the machining operations C, F, D with respect to the time required to perform the machining operations M1, M2.

Fig. 7 shows a further pair of workpieces, indicated with P3 and P4, symmetrical with each other and representing for example two beams with ends E3 and E4. Machining operations must be performed on the workpieces P3, P4 adjacent to the two ends E3 and E4 and more in particular six holes F1 adjacent to the end E3 and a single hole F2 adjacent to the end E4. Also in this case the six holes F1 can only be performed by a single head due to their proximity, and a substantially longer time is required to produce them (more than six times longer, including the times required to position the head) with respect to the time required to produce the hole F2.

Fig. 8 shows a workpiece P1 and a workpiece P4 side by side, on which the machining operations M1, M2, C, F, D must be performed on the workpiece P1 and the machining operations F1, F2 must be performed on the workpiece P4, according to the description above with reference to Figs. 6 and 7. Also in this case, performance of the groups of machining operations M1, M2 and C, D, F on the workpiece P1 requires different times with respect to performance of the machining operation F1, F2 on the workpiece P4.

The machining cycle that will be described with referencece to Figs. 9A-9F refers to the performance of machining operations on the workpieces shown in Fig. 7 using a machining center as shown in Figs. 1 to 3, for the purpose of illustrating by way of example how the machining center and the method according to the invention allow optimization of the machining cycle, drastically reducing the times with respect to those required in conventional machining centers. As will be more apparent below, besides reducing the overall machining times, the machining center and the method according to the invention also allow optimization of wear of the machining heads, preventing one from being overloaded with respect to the other.

Fig. 9A shows the workpieces P3 and P4, carried respectively by the table 29A and by the table 29B. The workpiece P4 has already been completed and therefore presents the hole F2 in proximity of the end E4 and the six holes F1 in proximity of the end E3, while the workpiece P3 is being machined and part of the holes F1 have been produced thereon. As can be seen in Fig. 9A, the holes F1 on the workpiece P3 are produced by the operating head 17A represented schematically at the side of the area to be machined. It must be understood that the representation is only schematic and that in fact the spindle of the head 17A will be rotated through 90° with respect to the position schematically indicated in the figure, i.e. with the axis orthogonal to the plane of the figure. As the workpiece P4 has been completely machined, the head 17B is in this step translated (arrow X in Fig. 9A) toward the workpiece P3 to perform part of the machining operations required thereon.

In Fig. 9B the workpiece P4 has been removed. This means that the table 29B on which it was constrained has been translated along the numerically controlled axis Y from the machining position to the unloading and loading position (area 40) to release the machined workpiece P4 and receive a new one to be machined from the loader 43B. It would also be possible to perform unloading of the machined workpiece in a different area with respect to the one in which loading of a new workpiece to be machined takes place.

The workpiece P3 being machined is still located in the left area of Fig. 9B, and in this step it is machined simultaneously by the heads 17A and 17B: the first continues to produce the holes F1, while the second produces the single hole F2.

It is understood from this first partial description of the machining cycle that in this embodiment loading and unloading of the workpieces can take place completely in masked time due to the fact that the workpieces are loaded on tables 29A, 29B provided with an independent movement along the numerically controlled axis Y. Moreover, it is understood from the description above that the operating heads 17A, 17B can machine both one and the other of the two workpieces P3, P4 so that the engagement of each head is substantially the same as the engagement of the other, avoiding stand-by times and consequently reducing the overall time required to machine each workpiece, and also obtaining balanced wear of the two heads and of the respective operating units 11A, 11B.

In Fig.9C a new workpiece P4, loaded on the table 29B by the loader 43B has been translated to the machining area, i.e. the space reachable by the tools of the operating heads 17A, 17B. The head 17B has finished performing the short machining operation represented by production of a single hole F2 in proximity of the end E4 of the workpiece P3 and therefore can once again translate (arrow X) toward the workpiece P4. Instead, the head 17A is still performing the more complex and longer machining operations required to produce all the holes F1 adjacent to the end E3 of the workpiece P3.

In Fig. 9D the workpiece has been completed, as the operating head 17A has finished producing the six holes F1. The operating head 17B has in the meantime positioned itself in proximity of the end E3 of the new workpiece P4 and has started to produce the holes F1. Having completed its machining cycle on the workpiece P3, the operating head 17A starts to translate (arrow X) toward the new workpiece P4.

In Fig.9E the workpiece P3 has been moved away from the machining area to be unloaded in the area 40 and replaced with a new workpiece P3 to be machined. The operating heads 17A and 17B are both over the workpiece P4, the first to produce the hole F2 and the second to complete the holes F1.

In the subsequent step (Fig. 9F) a new workpiece P3 on which machining operations are to commence has been carried to the machining area, while machining operations on the workpiece P4 have almost been completed, in the sense that the hole F2 has been produced and the holes F1 have almost been completed. The operating head 17B remains over the workpiece P4 to complete machining of the holes F1 while the operating head 17A translates (arrow X) toward the new workpiece P3, on the left in Fig. 9F, to start machining it. The subsequent step is that of Fig. 9A.

The two operating heads 17A, 17B of the two units 11A, 11B can perform the various machining operations with maximum flexibility due to the fact that each of the two heads is provided with a triple numerically controlled translational movement, along the axes X, YA and Z. This makes the machining movement of the two heads independent with respect to the movement of the two tables 29A, 29B along the axis Y.

It is understood from the above description that with the operating cycle performed on the basis of the method according to the invention idle times of the two heads 17A, 17B can be avoided, the two heads can be utilized in a balanced way and loading and unloading of the workpieces can be implemented in a sort of pendular cycle and therefore in masked time, i.e. while one of the two workpieces on which machining operations have been completed is unloaded and replaced with a new workpiece to be machined, the other of the two workpieces is being machined by the heads 17A, 17B.

It must be understood that this operating cycle can be performed not only on symmetrical or identical workpieces, but also on different workpieces such as those shown schematically in Fig. 8, the only condition for performing the cycle described being substantially that of being able to divide the various machining operations to be performed on the two workpieces so that one head performs machining operations for a smaller time interval on one workpiece and a larger interval on the other and vice versa. The optimal situation is obtained when the sum of the operating times of one head is identical to the sum of the operating times of the other, distributed on two workpieces machined in sequence, operating times being intended as the sum of the machining times and of the transfer and positioning times.

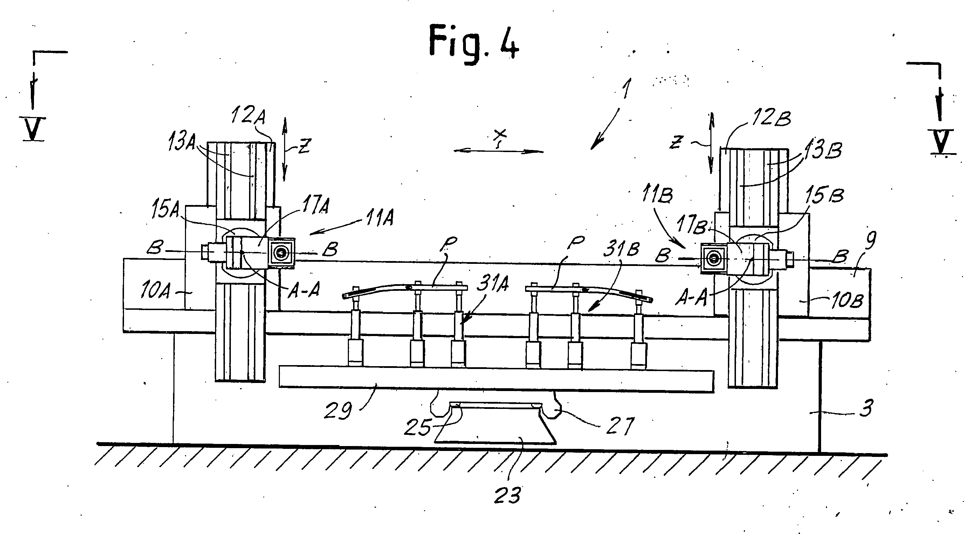

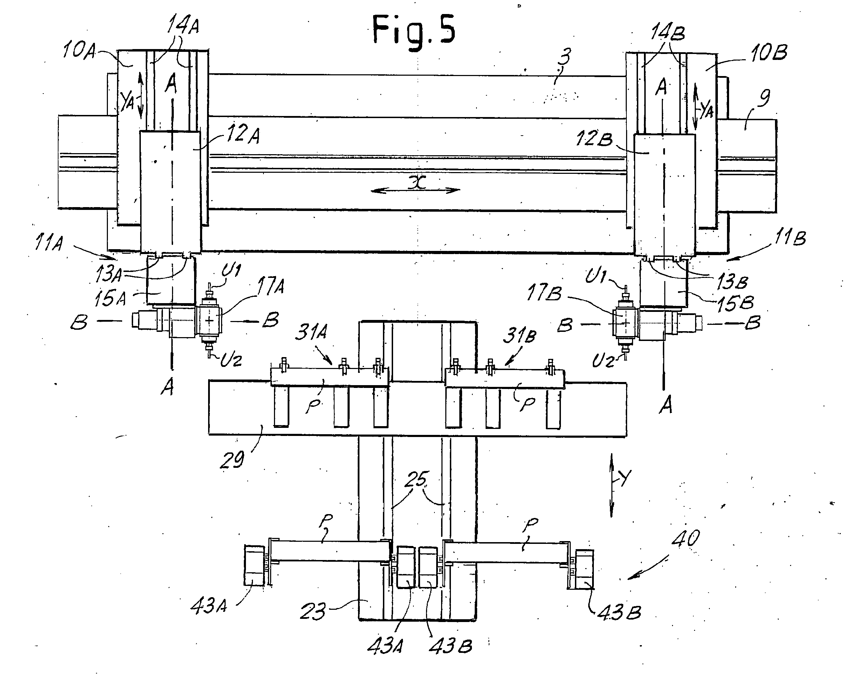

Figures 4 and 5 shows a different embodiment of the machining centre according to the invention, which is less advantageous but simpler with respect to that of Figs. 1 to 3. The same reference numbers indicate identical or equivalent parts to those of Figs. 1 to 3. The difference between the machining center of Figs. 1 to 3 and the machining center of Figs. 4 to 5 consists in the fact that in the second case a single machine bed 23 is provided, with horizontal guides 25 for a single slide 27 that carries a single table 29. The dimension of the table 29 in the direction of the axis X is substantially greater with respect to that of the tables 29A, 29B. Moreover, it is provided with a large number of clamping members 31A, 31B in order to clamp (see Fig. 4) on the same table 29 two workpieces substantially aligned along the direction X.

The workpieces P are loaded on the two sets 31A, 31B of clamping members by two loading systems, again indicated with 43A and 43B, disposed in the loading and unloading area 40. The operating heads 17A, 17B of the units 11A, 11B are configured in the same way as that of Figs. 1 to 3 and are controlled according to the numerically controlled axes of translation X, YA, Z and axes of rotation A, B.

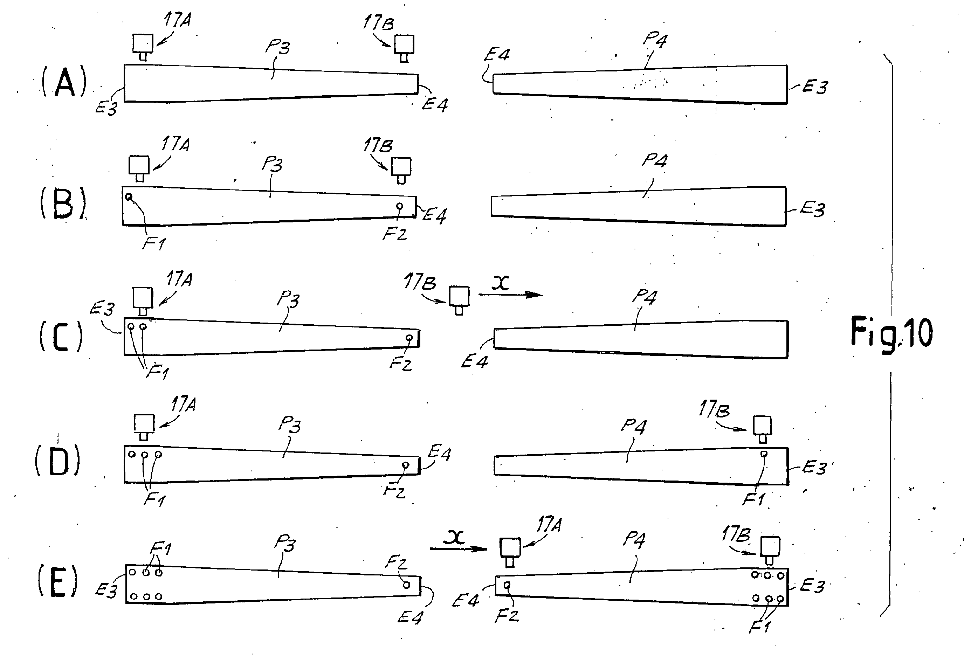

With a machining center configured in this way it is possible to perform a machining cycle, which will be described schematically below with reference to Figs. 10A-10E and which presents substantial common advantages to the machining cycle described with reference to Figs. 9A-9F, although in this case the loading and unloading operations cannot take place in masked time, as will be apparent from the description below.

In Figs. 10A-10E reference is made to the machining of two identical or symmetrical workpieces P3, P4 (Fig. 7), but it must be understood that the criteria described below for distribution of the machining steps to the heads 17A, 17B can also be adopted to machine more complex workpieces, such as those P1, P2 of Fig. 6, or pairs of non-identical workpieces as represented schematically in Fig. 8 for the workpieces P1, P4.

In Fig. 10A two workpieces P3, P4 have been positioned in the machining area of the heads 17A, 17B, They have not undergone any of the machining operations to be performed using the tools mounted on the operating heads 17A, 17B. In Fig. 10A the heads 17A, 17B have both been positioned over the workpiece P3 (on the left in the drawing) to start machining it.

In Fig. 10B the heads 17A, 17B have started machining. The head 17A is producing a first hole F1 in proximity of the end E3 of the workpiece P3, while the operating head 17B is producing the hole F2 in proximity of the end E4 of the workpiece P3. The workpiece P4 is in stand-by and no machining operations are being performed thereon.

In Fig. 10C, having finished the machining operation on the workpiece P3, i.e. producing the hole F2, the operating head 17B is translated (arrow X) toward the workpiece P4 and more precisely toward the end E3 thereof. Vice versa, having to perform a longer machining operation, the operating head 17A remains over the workpiece P3 and continues to produce the holes F1.

In Fig. 10E machining of the workpiece P3 has been completed and the operating head 17A is translated (arrow X) toward the workpiece P4 to produce the hole F2 thereon in proximity of the end E4. Simultaneously, the operating head 17B completes the sequence of holes F1 in proximity of the-end-E3 of the workpiece P4. The workpiece P3 remains in stand-by as it cannot be unloaded in this step, being located on the same table to which the workpiece P4 being machined is clamped. After machining of the latter has been completed, the table 29 translates to the loading and unloading area 40, the machined workpieces P3, P4 are unloaded and replaced with new workpieces P3, P4 to be machined. The table is then carried back to the machining area and the cycle starts up again from the situation shown in Fig. 10A.

It is understood from the description with reference to Figs. 10A-10E that the operating cycle performed with the machining center of Figs. 4 and 5 again presents advantages of optimizing the times and balancing the use of the operating heads 17A, 17B, although it does not have the same advantages as the cycle described with reference to Figs. 9A-9F, with regard to loading and unloading in masked time. Nonetheless, the advantage is obtained of halving the loading and unloading times with respect to machining centers in which the workpieces cannot be unloaded and loaded in pairs.

It is understood that the drawing only shows an example provided by way of a practical arrangement of the invention, and that said invention can vary in forms and arrangement without however departing from the scope of the concept on which the invention is based.

## Claims

1. A machining center comprising:
- at least a first operating head and a second operating head independent from each other and each moving according to a plurality of numerically controlled axes of translation;
- at least a first workpiece table movable according to an approximately horizontal translation axis, to be moved toward and away from the operating heads
- a loading and unloading area with a double loader to load a first workpiece and a second workpiece to be machined in positions approximately side by side along said first numerically controlled axis of translation;
**characterized in that**: said first and the second operating head are controlled to perform an operating cycle comprising the steps of: respectively performing a first series of machining operations and a second series of machining operations on the first workpiece; transferring the operating head, which first completes its series of machining operations, toward the second workpiece on which it starts to perform a respective series of machining operations and transferring the second operating head toward the second workpiece, on which it performs a respective series of machining operations, after having completed said second series of machining operations on the first workpiece.

2. Machining center according to claim 1, **characterized in that** said operating heads are movable independently from each other along three respective numerically controlled axes of translation.

3. Machining center according to claim 2, **characterized in that** said three numerically controlled axes of translation along which each of said operating heads is movable are substantially orthogonal to one another.

4. Machining center according to claim 1, 2 or 3, **characterized in that** said at least one workpiece table is movable along a numerically controlled axis of translation.

5. Machining center according to claims 2 and 4, **characterized in that** said numerically controlled axis of translation along which said at least one workpiece table translates is substantially parallel to one of the numerically controlled axis of translation along which each of said operating heads moves.

6. Machining center according to one or more of the preceding claims, **characterized in that** it comprises a second workpiece table associated with said double loader, said first and second workpiece tables being arranged and controlled to load a first workpiece on the first workpiece table and a second workpiece on the second workpiece table, said tables being movable independently from each other along respective axes of translation substantially parallel with each other.

7. Machining center according to claim 6, **characterized in that** said translation axes of the first and of the second workpiece table are numerically controlled axes.

8. Machining center according to claim 6 or 7, **characterized in that** said first workpiece table and said second workpiece table are controlled so that, when the second operating head has been transferred toward the second workpiece, said first workpiece table is translated toward the loading and unloading area, to perform unloading of the first machined workpiece and loading of a new workpiece to be machined, while the operating heads machine the second workpiece on the second workpiece table.

9. Machining center according to one or more of claims 1 to 5, **characterized in that** it comprises a single workpiece table, controlled so that when said first and said second operating head have performed their respective machining operations on the first and on the second workpiece, the table is translated toward the loading and unloading area to unload the two machined workpieces and load two new workpieces to be machined in the subsequent cycle.

10. Machining center according to one or more of the preceding claims, **characterized in that** said operating heads are each provided with a further movement of oscillation or rotation according to at least one and preferably two numerically controlled axes of rotation.

11. Machining center according to one or more of the preceding claims, **characterized in that** said first and said second operating head are movable along a common guide substantially horizontal and substantially orthogonal to the axes of translation of said at least one workpiece table.

12. Machining center according to one or more of claims 1 to 11, **characterized in that** said operating heads are each movable along a respective guide substantially orthogonal to the axis of translation of said at least one workpiece table, it being possible for the two heads to exchange position along said first numerically controlled axis of translation.

13. A method for machining two workpieces in sequence using a first numerically controlled operating head and a second numerically controlled operating head independent from each other, comprising the steps of:
- taking said first and said second operating head to machine a first workpiece;
- when the first operating head has concluded a first series of machining operations on the first workpiece, transferring said first operating head over a second workpiece and starting to machine the second workpiece with it;
- when the second operating head has concluded a second series of machining operations on the first workpiece, transferring said first operating head over the second workpiece and performing a machining operation of the second workpiece with it.

14. Method according to claim 13, wherein when the second operating head has been transferred over the second workpiece, the first workpiece is unloaded and replaced with a third workpiece to be machined while the second workpiece is being machined.

15. Method according to claim 14, wherein said second workpiece and said third workpiece are machined by the first and by the second operating head in a substantially symmetrical sequence with respect to the sequence of machining operations of the first and of the second workpiece, the second operating head being translated over the third workpiece and starting to machine the third workpiece after concluding machining operations on the second workpiece, the first head being subsequently translated over the third workpiece, after completing machining of the second workpiece.

16. Method according to claim 13, wherein when said first and said second workpieces have been machined, they are approximately simultaneously unloaded and replaced with a further first workpiece and second workpiece to be machined in a subsequent cycle.

17. Method according to one or more of claims 13 to 16, wherein the machining and transfer times of the first head to perform the respective machining operations on two workpieces in sequence corresponds approximately to the machining and transfer times of the second head to perform the respective machining operation on two workpieces in sequence.
